(19)

Europäisches
Patentamt
European
Patent Office
Office européen
des brevets

(11) **EP 4 549 500 A1**

(12) **EUROPEAN PATENT APPLICATION**
published in accordance with Art. 153(4) EPC

(43) Date of publication:
**07.05.2025 Bulletin 2025/19**

(21) Application number: **23831554.3**

(22) Date of filing: **29.06.2023**

(51) International Patent Classification (IPC):
***C08J 9/00*** (2006.01)

(52) Cooperative Patent Classification (CPC):
**C08J 9/00;** Y02E 60/10

(86) International application number:
**PCT/JP2023/024108**

(87) International publication number:
**WO 2024/005115 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2022 JP 2022105964**

(71) Applicant: **Mitsubishi Chemical Corporation
Tokyo 100-8251 (JP)**

(72) Inventors:
• **KOIDO, Shunsuke
Tokyo 100-8251 (JP)**
• **KADOMAE, Yousuke
Tokyo 100-8251 (JP)**
• **SEO, Masayuki
Tokyo 100-8251 (JP)**
• **HARADA, Tomoaki
Tokyo 100-8251 (JP)**

(74) Representative: **Vossius & Partner
Patentanwälte Rechtsanwälte mbB
Siebertstrasse 3
81675 München (DE)**

(54) **POROUS FILM**

(57)    A porous film according to one aspect of the present invention is a porous film comprising a polyolefin-based resin (A) and a styrene-based thermoplastic elastomer (B), wherein the porous film has a thickness (T) of 50 μm or less, an average tensile breaking strength of 15 MPa or more, an average tensile breaking elongation of 35% or more, and a ratio (S/T) of air resistance (S) (sec/100 cc) to thickness (T) (μm) of 0.15 or more and 1.45 or less.

**EP 4 549 500 A1**

## Description

Technical Field

The present invention relates to a porous film.

Background Art

Polymer porous films having a large number of fine communicating pores are used in a variety of fields, including separation membranes used in the production of ultrapure water, purification of chemical solutions, water treatment, and the like, waterproof and moisture-permeable films used in clothing, sanitary materials and the like, and separators used in electronic components such as capacitors, batteries, electrolytic capacitors.

Among the above, porous films made of polyolefin-based resins are produced by, for example, a method in which the crystallization of a polyolefin-based resin is controlled in a cooling and solidifying step after melt extrusion, and the crystallized polyolefin-based resin in the form of a film is porosified by stretching; a method in which a polyolefin molded article in which different types of solids are micro-dispersed is subjected to a strain such as stretching, to create pores among the different types of solids to achieve porosification; and a method in which fine powder of different types of polymers or the like, a paraffin, a wax, or the like is micro-dispersed in a polyolefin-based resin and then extracted with a solvent.

Patent Literatures 1 and 2 propose techniques in which a polypropylene-based resin is used as a matrix and blended with a styrene-based thermoplastic elastomer as a domain that is partially compatible with the matrix, and the blend is melt-extruded through a T-die and then melt-solidified with a cast roll to form a sheet, which is then biaxially stretched to obtain a stretched porous film. These techniques enable to adjust the porous structure with the type of styrene-based thermoplastic elastomer.

Citation List

Patent Literature

PTL 1: JP 2016-141786 A

PTL 2: JP 2017-222823 A

Summary of Invention

Technical Problem

Methods for improving the air permeation properties of a porous film include, for example, increasing the porosity of the film (increasing the number of communicating pores); and reducing the film thickness.

Moreover, methods for improving the porosity include, for example, a method in which the crystallinity of the matrix resin is increased by, for example, increasing the cast temperature; a method in which the machine direction (MD) and transverse direction (TD) stretch ratios are increased, and the machine direction (MD):transverse direction (TD) stretch ratio is also adjusted; a method in which an elastomer with a high viscosity is used; and a method in which an elastomer having low compatibility with the matrix resin is used.

However, an excessive increase in porosity may reduce the mechanical strength of the film, making the film unsuitable for practical use.

On the other hand, it has been found that an attempt to improve the air permeation properties by reducing the film thickness and by increasing the porosity using the above-described methods may cause uneven close contact with the cast roll and film breakage during film formation.

It is therefore an object of the present invention to provide a film that is less likely to cause uneven close contact and film breakage during film formation, and that satisfies air permeation properties and mechanical properties simultaneously.

Solution to Problem

As a result of extensive research in view of the above-described problem, the present inventors have successfully obtained a film that has a small thickness but is less likely to cause uneven close contact and film breakage, and that satisfies air permeation properties and mechanical properties simultaneously, by adjusting the combination of the polyolefin-based resin and the styrene-based thermoplastic elastomer, the film forming conditions, and the like to set the tensile breaking strength of the film after pore formation to a specific value or more. This has led to the completion of the present invention.

The present invention relates to the following:

[1] A porous film comprising a polyolefin-based resin (A) and a styrene-based thermoplastic elastomer (B), wherein the porous film has a thickness of 50 $\mu$m or less, an average tensile breaking strength of 15 MPa or more, an average tensile breaking elongation of 35% or more, and a ratio (S/T) of air resistance S (sec/100 cc) to thickness T ($\mu$m) of 0.15 or more and 1.45 or less.

[2] The porous film according to [1] above, wherein the average tensile breaking strength is 25 MPa or more.

[3] The porous film according to [1] or [2] above, wherein the polyolefin-based resin (A) is homopolypropylene.

[4] The porous film according to any one of [1] to [3] above, wherein the styrene-based thermoplastic elastomer (B) comprises a styrene-olefin-styrene block copolymer (B2) in a proportion of 50% by mass or more of the total amount of the styrene-based thermoplastic elastomer (B) taken as 100% by mass.

[5] The porous film according to any one of [1] to [4] above, wherein the styrene-based thermoplastic elastomer (B) has a styrene content of 10% by mass or more and 40% by mass or less.

[6] The porous film according to any one of [1] to [5] above, wherein the styrene-based thermoplastic elastomer (B) comprises a resin with a weight average molecular weight (Mw) of 200,000 or more in a proportion of 50% by mass or more of the total amount of the styrene-based thermoplastic elastomer (B) taken as 100% by mass.

[7] The porous film according to any one of [1] to [6] above, wherein the styrene-based thermoplastic elastomer (B) comprises a resin that has a melt flow rate (MFR) of less than 0.1 g/10 min as measured at a temperature of 200°C and a load of 10 kg, or that is not flowable, in a proportion of 50% by mass or more of the total amount of the styrene-based thermoplastic elastomer (B) taken as 100% by mass.

[8] The porous film according to any one of [1] to [7] above, wherein the porous film comprises a styrene-olefin copolymer (B1) and the styrene-olefin-styrene block copolymer (B2) as the styrene-based thermoplastic elastomer (B), and wherein the styrene-olefin copolymer (B1) has a melt flow rate (MFR) of 1.0 g/10 min or more as measured at a temperature of 200°C and a load of 10 kg.

[9] The porous film according to any one of [1] to [8] above, wherein a content of the polyolefin-based resin (A) is 60% by mass or more and 95% by mass or less.

[10] The porous film according to any one of [1] to [9] above, wherein a content of the styrene-based thermoplastic elastomer (B) is 5% by mass or more and 40% by mass or less.

[11] The porous film according to any one of [1] to [10] above, further comprising a crystal nucleating agent (C).

[12] The porous film according to any one of [1] to [11] above, having an air resistance (S) of 50 sec/100 cc or less.

[13] A separator for power storage device comprising the porous film according to any one of [1] to [12] above.

[14] A power storage device comprising the separator for power storage device according to [13] above.

Advantageous Effects of Invention

The porous film of the present invention is less likely to cause uneven close contact and film breakage during film formation, and can satisfy air permeation properties and mechanical properties simultaneously.

Description of Embodiments

Hereinafter, a porous film and a method for producing the porous film as exemplary embodiments of the present invention will be described in detail; however, the scope of the present invention is not limited to the embodiments described below.

As used herein, the term "film" conceptually includes a sheet and a film.

As used herein, the recitation "x to y" (x and y are any numbers) includes, unless otherwise specified, not only the meaning of "x or more and y or less", but also the meaning of "preferably more than x" or "preferably less than y".

The recitation "x or more" (x is any number) includes the meaning of "preferably more than x", unless otherwise specified; and the recitation "y or less" (y is any number) includes the meaning of "preferably less than y", unless otherwise specified.

Furthermore, the expression "x and/or y (x and y are any features)" means at least one of x and y, and means the three of x only, y only, and x and y.

<Resin Composition>

The porous film of the present invention (hereinafter also referred to as "the film") is preferably formed of a resin composition comprising at least a polyolefin-based resin and a styrene-based thermoplastic elastomer (hereinafter also referred to as "the composition").

Components constituting the composition will be hereinafter described in detail.

1. Polyolefin-Based Resin (A)

Examples of the polyolefin-based resin (A) include polypropylene-based resins, such as homopolypropylene (propylene homopolymer), and random copolymers and block copolymers of propylene with $\alpha$-olefins such as ethylene, 1-butene, 1-pentene, 1-hexene, 1-heptene, 1-octene, 1-nonene, and 1-decene; polyethylene-based resins, such as high-density polyethylene (HDPE), linear low-density polyethylene (LLDPE), low-density polyethylene (LDPE), random copolymers and block copolymers of ethylene with $\alpha$-olefins such as 1-butene, 1-pentene, 1-hexene, 1-heptene, 1-octene, 1-nonene, and 1-decene; and modified resins of the above-mentioned polypropylene-based resins and polyethylene-based resins modified with a functional group such as an acid anhydride.

The polyolefin-based resins (A) mentioned above can be used singly or in a combination of two or more.

Among these, a polypropylene-based resin is preferred, and homopolypropylene is more preferred from the viewpoint of the mechanical strength.

When a polypropylene-based resin is used as the polyolefin-based resin (A), the polypropylene-based resin has an isotactic pentad fraction of preferably 80 mol% or more and 99 mol% or less, more preferably 83 mol% or more and 98 mol% or less, even more preferably 85 mol% or more and 97 mol% or less, although not specifically limited thereto. The isotactic pentad fraction indicates tacticity, and an excessively low isotactic pentad fraction may result in a failure to achieve sufficient porosification by stretching. On the other hand, the upper limit of the isotactic pentad fraction is specified at an upper limit value industrially available at the present time, but is not limited thereto if a higher-regularity resin is industrially developed in the future.

The isotactic pentad fraction means the proportion of a steric structure in which five methyl groups being side chains with respect to the main chain made by carbon-carbon bonds constituted of arbitrary continuous five propylene units are all positioned in the same direction. The assignment of signals of the methyl group region is according to A. Zambelli et al. (Macromol. 8,687 (1975)).

The polyolefin-based resin (A) has an Mw/Mn of preferably 1.5 or more and 10.0 or less, more preferably 2.0 or more and 8.0 or less, even more preferably 2.0 or more and 6.0 or less, although not specifically limited thereto. Mw/Mn is a parameter indicating the molecular weight distribution, and a lower Mw/Mn means a narrower molecular weight distribution. Setting Mw/Mn to the above-defined lower limit value or more achieves sufficient extrudability and enables industrial mass production. On the other hand, setting Mw/Mn to the above-defined upper limit value or less can ensure sufficient mechanical strength.

As used herein, Mw/Mn is the value as measured by GPC (gel permeation chromatography).

The polyolefin-based resin (A) has a melt flow rate (MFR) of preferably 0.5 g/10 min or more and 15 g/10 min or less, more preferably 1.0 g/10 min or more and 10 g/10 min or less, even more preferably 1.5 g/10 min or more and 8 g/10 min or less, although not specifically limited thereto. Setting the MFR to the above-defined lower limit value or more can achieve a sufficient melt viscosity in molding processing and can ensure high productivity. On the other hand, setting the MFR to the above-defined upper limit value or less can achieve a sufficient strength.

As used herein, the MFR of the polyolefin-based resin (A) is the value as measured according to JIS K7210-1 (2014) under the condition of a temperature of 230°C and a load of 2.16 kg.

Examples of commercially available products that can be used as the polyolefin-based resin (A) include trade names "Novatec PP", "WINTEC" (manufactured by Japan Polypropylene Corp.); "Notio", "Tafmer XR" (manufactured by Mitsui Chemicals Inc.); "Zelas", "Thermorun" (manufactured by Mitsubishi Chemical Corp.); "Sumitomo Noblen", "Tafthren" (manufactured by Sumitomo Chemical Co., Ltd.); "Prime PP", "Prime TPO" (manufactured by Prime Polymer Co., Ltd.); "Adflex", "Adsyl", "HMS-PP (PF814)" (manufactured by SunAllomer Ltd.); and "Versify", "Inspire" (manufactured by Dow Chemical Co.).

A content of the polyolefin-based resin (A) in the composition is preferably 60% by mass or more and 95% by mass or less, more preferably 65% by mass or more and 90% by mass or less, and even more preferably 65% by mass or more and 85% by mass or less. Setting the content of the polyolefin-based resin (A) in the above-defined range allows a sea-island structure containing the polyolefin-based resin (A) as a matrix and the styrene-based thermoplastic elastomer (B) as a domain to be formed, which facilitates forming a porous structure by stretching.

2. Styrene-Based Thermoplastic Elastomer (B)

By adding the styrene-based thermoplastic elastomer (B) to the polyolefin-based resin (A) to form a sea-island structure in which the styrene-based thermoplastic elastomer (B) forms a domain in the matrix of the polyolefin-based resin (A), the film can be efficiently obtained as a porous film with a fine, highly uniform porous structure, and the shape and pore size of the pores can be easily controlled.

The styrene-based thermoplastic elastomer (B) is one of thermoplastic elastomers based on a styrene component, and is a copolymer composed of a continuous structure of a soft component (such as a butadiene component) and a hard component (such as the styrene component). Specifically, the copolymer includes a copolymer hydrogenated to convert the carbon double bond of the copolymer into a single bond.

Examples of types of the copolymer include a random copolymer, a block copolymer, and a graft copolymer.

Examples of the block copolymer include those with a linear block structure or a radially branched block structure, and a block copolymer with any structure may be used in the present invention.

Examples of the styrene-based thermoplastic elastomer (B) include a styrene-olefin copolymer (B1) and a styrene-olefin-styrene copolymer (B2). Examples of the styrene-olefin copolymer (B1) include styrene-butadiene copolymer (SBR), hydrogenated styrene-butadiene copolymer (SEB), styrene-isoprene copolymer (SIR), and styrene-ethylene-propylene copolymer (SEP). Examples of the styrene-olefin-styrene copolymer (B2) include styrene-butadiene-styrene copolymer (SBS), styrene-butadiene-butylene-styrene copolymer (SBBS), styrene-ethylene-butadiene-styrene copolymer (SEBS), styrene-isoprene-styrene copolymer (SIS), styrene-ethylene-propylene-styrene copolymer (SEPS), and styrene-ethylene-ethylene-propylene-styrene copolymer (SEEPS).

The styrene-based thermoplastic elastomers (B) mentioned above may be used singly or in a combination of two or more.

Among the above, a resin with a structure having styrene polymers at both ends is preferably used as a main component, from the viewpoint of the ease of forming a porous structure, because the porous structure tends to be formed when the resin has low compatibility with the polyolefin-based resin (A). On the other hand, in order to efficiently disperse the styrene-based thermoplastic elastomer (B) in the composition, a resin containing an ethylene component (hydrogenated butadiene component), an ethylene-propylene component (hydrogenated isoprene component), or a butylene component, which has high compatibility with the polyolefin-based resin (A), is preferably used as a main component.

That is, from the viewpoint of the ease of forming a porous structure, the styrene-olefin-styrene copolymer (B2) is preferably used as a main component; from the viewpoint of the dispersibility of the styrene-based thermoplastic elastomer (B), SEP, SEPS or SEBS is preferably used as a main component; and from both viewpoints, SEPS or SEBS is more preferably used as a main component, and among these, SEPS is particularly preferably used as a main component.

As used herein, the term "main component" of the styrene-based thermoplastic elastomer (B) refers to the resin with the highest content among the styrene-based thermoplastic elastomers (B) contained in the composition. More specifically, "main component" refers to the resin constituting preferably 50% by mass or more, more preferably 60% by mass or more, even more preferably 65% by mass or more, of the total amount of the styrene-based thermoplastic elastomer (B) taken as 100% by mass, with 100% by mass being the upper limit.

Furthermore, among the above, the composition preferably comprises the styrene-olefin copolymer (B1) and the styrene-olefin-styrene block copolymer (B2) as the styrene-based thermoplastic elastomer (B), from the viewpoint of satisfying higher levels of air permeation properties and mechanical properties simultaneously.

Furthermore, the styrene-olefin copolymer (B1) preferably has a melt flow rate (MFR) of 1.0 g/10 min or more as measured at a temperature of 200°C and a load of 10 kg.

Usually, reducing the thickness of a porous film or increasing the porosity in order to increase the air permeation properties of the film causes problems such as poor film formability and lower mechanical strength.

The present inventors have conducted research repeatedly under the above-described circumstances. As a result, they have found that, by combining the two specific types of styrene-based thermoplastic elastomers (B), it is possible to increase the uniformity of the porous structure obtained by the stretching step, and consequently provide a porous film that has a small thickness but has excellent film formability, and also has excellent mechanical strength and air permeation properties.

The above-described effect is believed to be achieved by the following mechanism.

Pores in the porous film of the present invention are mainly formed from cleavages formed as starting points during stretching, inside the domain of the styrene-based thermoplastic elastomer (B). The structure of the domain is closely related to the pore structure; the larger the domain, the larger the pores, and the better the air permeation properties.

Among the styrene-based thermoplastic elastomers (B), the styrene-olefin-styrene copolymer (B2) is preferred because of the ease of obtaining a large domain.

On the other hand, the styrene-olefin-styrene copolymer (B2) has low compatibility with the polyolefin-based resin (A) for forming the matrix, and has poor efficiency in forming cleavages inside the domain, which serve as the starting points for pore opening in pore formation.

Thus, by using the styrene-olefin copolymer (B1) having high compatibility with the polyolefin-based resin (A) with the styrene-olefin-styrene copolymer (B2), the styrene-olefin copolymer (B1) is believed to act also as a compatibilizer, which improves the adhesion at the interface between the matrix and the domain, and promotes the pore formation inside the domain.

Moreover, uneven distribution of the styrene-olefin copolymer (B1) on the surface of the domain improves the dispersibility of the domain and increases the uniformity of the porous structure, which improves the mechanical properties.

Furthermore, formation of pores by the styrene-olefin copolymer (B1) among the large pores formed by the styrene-olefin-styrene copolymer (B2) inside the domain can be expected to improve the communicability of pores to further improve the air permeation properties.

From the above-described viewpoint, the melt flow rate (MFR) of the styrene-olefin copolymer (B1), as measured at a temperature of 200°C and a load of 10 kg, is more preferably 1.2 g/10 min or more, even more preferably 1.4 g/10 min or more, and still more preferably 1.6 g/10 min or more.

The styrene-based thermoplastic elastomer (B) has a styrene content of preferably 10% by mass or more and 40% by mass or less, more preferably 10% by mass or more and 35% by mass or less. When the styrene content is the above-defined lower limit value or more, the domain can be effectively formed in the polyolefin-based resin (A), and when the styrene content is the above-defined upper limit value or less, formation of an excessively large domain can be prevented.

When the composition comprises two or more types of styrene-based thermoplastic elastomers (B), the styrene content refers to the total content in all the styrene-based thermoplastic elastomers (B).

The resin used as the main component among the styrene-based thermoplastic elastomers (B) in the composition has a weight average molecular weight (Mw) of preferably 200,000 or more, more preferably 250,000 or more and 1,000,000 or less, even more preferably 250,000 or more and 800,000 or less, still more preferably 250,000 or more and 600,000 or less, although not specifically limited thereto.

The resin used as the main component among the styrene-based thermoplastic elastomers (B) in the composition has a Mw/Mn of preferably 1.00 or more and 1.50 or less, more preferably 1.00 or more and 1.40 or less, even more preferably 1.05 or more and 1.20 or less, although not specifically limited thereto.

When porosifying the film made of the composition by stretching it at least uniaxially, the morphology of the polypropylene-based resin (A) and the styrene-based thermoplastic elastomer (B) in the resin composition before stretching is an important factor in the formation of a porous structure.

Specifically, it is important that the styrene-based thermoplastic elastomer (B), which is present as the domain, be present in a spherical shape in the matrix mainly containing the polypropylene-based resin (A).

Typically, when cooling and solidifying a resin composition with a matrix/domain sea-island structure after melt-extruding the composition, the flowing resin composition extruded from a shaping facility such as a spinneret or a nozzle is cooled and solidified using a cooling and solidification facility such as a cast roll (cooling roll), air cooling, or water cooling. Here, the resin composition is melted and elongated in the gap (space) between the shaping facility and the cooling and solidification facility, such that if the styrene-based thermoplastic elastomer (B) as the domain has a small weight average molecular weight, a resin composition in which the domain is elongated in the flow direction (extrusion direction) is obtained.

When the domain is elongated in the flow direction (extrusion direction), the area of the domain particles in the flow direction then increases, which makes it less likely for cleavages to be formed inside the domain by the stress in the flow direction (extrusion direction), and may result in a failure to form a sufficient porous structure.

On the other hand, when the styrene-based thermoplastic elastomer (B) as the domain has a large weight average molecular weight, the domain is less likely to be influenced by the melt elongation, and the domain in the resulting resin composition before stretching tends to maintain its spherical shape. The spherical shape of the domain is believed to facilitate formation of cleavages inside the domain by the stress in the flow direction (extrusion direction), which results in formation of a sufficient porous structure.

Furthermore, in general, the higher the molecular weight, the higher the tensile breaking strength tends to be; therefore, selecting a resin with a high weight average molecular weight (Mw) as the main component of the styrene-based thermoplastic elastomer (B) is expected to further improve the tensile breaking strength.

In view of the above, the weight average molecular weight (Mw) of the resin used as the main component among the styrene-based thermoplastic elastomers (B) preferably falls in the above-defined range.

More preferably, the resin used as the main component among the styrene-based thermoplastic elastomers (B) has the above-defined range of the Mw/Mn (molecular weight distribution) ratio of weight average molecular weight (Mw) to number average molecular weight Mn, which facilitates imparting a uniform dispersion diameter to the domain formed.

The resin used as the main component among the styrene-based thermoplastic elastomers (B) in the composition preferably has a melt flow rate (MFR) of preferably less than 0.1 g/10 min, although not specifically limited thereto, or is preferably not flowable.

As used herein, the MFR of the styrene-based thermoplastic elastomer (B) is the value as measured according to JIS K7210-1 (2014) under the condition of a temperature of 200°C and a load of 10 kg.

The styrene-based thermoplastic elastomer (B) dispersed in the resin composition changes its shape in response to a viscosity difference from the polyolefin-based resin (A); however, when a styrene-based thermoplastic elastomer with an MFR in the above-defined range is used as the main component, the shape of the elastomer tends to be spherical.

Unlike a domain with a large aspect ratio, a domain dispersed in a spherical shape is preferred in that the domain facilitates increasing the uniformity of the porous structure obtained in the subsequent stretching step, and that the domain achieves excellent physical property stability.

Furthermore, the use of a styrene-based thermoplastic elastomer with an MFR in the above-defined range as the main component has the advantage of facilitating concentration of stress inside the domain during the stretching step, which facilitates formation of starting points for pore opening and thus, facilitates porosification.

A content of the styrene-based thermoplastic elastomer (B) in the composition is preferably 5% by mass or more and 40% by mass or less, more preferably 10% by mass or more and 37% by mass or less, and even more preferably 15% by mass or more and 35% by mass or less. Setting the content of the styrene-based thermoplastic elastomer (B) in the above-defined range allows a sea-island structure containing the polyolefin-based resin (A) as a matrix and the styrene-based thermoplastic elastomer (B) as a domain to be formed, which facilitates forming a porous structure by stretching.

3. Crystal Nucleating Agent (C)

The composition may comprise a crystal nucleating agent (C), because increasing the rigidity of the polyolefin-based resin (A) is believed to be effective for forming voids during porosification between the polyolefin-based resin (A) and the styrene-based thermoplastic elastomer (B) by stretching.

The crystal nucleating agent (C) is preferably an $\alpha$-nucleating agent, and examples of usable products include dibenzylidene sorbitol (trade name "Gelol MD" manufactured by New Japan Chemical Co., Ltd.), "Adekastab NA-11", "Adekastab NA-27", "Adekastab NA-902", "Adekastab NA-21 ", and "Adekastab NA-71" (all of the five types manufactured by Adeka Corporation), a masterbatch containing a mixture of magnesium stearate and silica (trade name "Hi-Cycle Master" manufactured by Dainichiseika Color & Chemicals Mfg. Co., Ltd.), and a masterbatch containing sodium salt of 2-hydroxy-2-oxo-4,6,10,12-tetra-tert-butyl-1,3,2-dibenzo[d,g]perhydrodioxaphosphocin (trade name "Adekastab M-701" manufactured by ADEKA Corporation).

Other examples of $\alpha$-nucleating agents include inorganic nucleating agents, such as silica, talc, and calcium carbonate; and organic (carboxylic acid metal salt-type) nucleating agents, such as calcium stearate, sodium benzoate, aluminum benzoate, aluminum dibenzoate, potassium benzoate, lithium benzoate, sodium $\beta$-naphthalate sodium cyclohexanecarboxylate, pimelic acid metal salts, and rosin acid metal salts. Other examples include benzylidenesorbitol and its derivative types, and phosphate metal salts. Additional examples include polymer types, such as poly-3-methylbutene-1, polyvinylcycloalkane, polyvinyltrialkylsilane, EPR, Kevlar fiber, and sodium 2,2'-methylenebis(4,6-di-tert-butylphenyl) phosphate.

The composition contains the $\alpha$-nucleating agent in an amount of preferably 0.001 parts by mass or more and 10 parts by mass or less, more preferably 0.005 parts by mass or more and 5 parts by mass or less, even more preferably 0.01 parts by mass or more and 2 parts by mass or less, still more preferably 0.05 parts by mass or more and 1.5 parts by mass or less, per 100 parts by mass of the resin components in the composition. If the amount of the $\alpha$-nucleating agent is less than 0.001 parts by mass, $\alpha$-crystals may not be sufficiently formed. On the other hand, if the amount of the $\alpha$-nucleating agent is more than 10 parts by mass, bleeding, plate-out, powder fall-off, and the like of the $\alpha$-nucleating agent may occur during the film formation step, secondary processing step or the like, and besides, costs may be increased.

4. Other Components

The composition may be optionally blended with various types of additives, for example, a thermal stabilizer, an antioxidant, an ultraviolet absorbent, a light stabilizer, a colorant, an antistatic agent, a hydrolysis preventing agent, a lubricant, and a flame retardant, in amounts not impairing the properties. The composition may also comprise other resins in amounts not impairing the properties.

Furthermore, the composition can be subjected to, as required in the range not impairing the present invention, surface processing such as corona treatment, plasma treatment, printing, coating or vapor deposition, and further perforation processing and the like; and several sheets of the porous film of the present invention can also be laminated according to the application and used.

<Porous Film>

The film may be formed of only a porous layer made of the above-described resin composition, or may be laminated with another layer in the range not impairing the features of the present invention.

As used herein, the term "porous film" refers to a film with a porosity of 50% or more, preferably 55% or more, more preferably 60% or more. When the film has a layer other than the porous layer, the porosity of only the porous layer may fall in the above-defined range.

Porosity can be calculated from the density of the resin composition using the method described in the Examples.

The film has a thickness (T) of 50 $\mu$m or less. When the thickness (T) is 50 $\mu$m or less, good air permeation properties can be achieved.

On the other hand, the lower limit of the thickness (T) of the film is preferably 1 $\mu$m or more, in order to allow the film to maintain sufficient strength. From this viewpoint, the thickness (T) of the film is preferably 1 $\mu$m or more and 50 $\mu$m or less, more preferably 2 $\mu$m or more and 30 $\mu$m or less, and even more preferably 5 $\mu$m or more and 25 $\mu$m or less.

The film has an average tensile breaking strength of 15 MPa or more. When the average tensile breaking strength of the film is 15 MPa or more, excellent mechanical properties can be achieved.

From this viewpoint, the average tensile breaking strength of the film is preferably 20 MPa or more, and particularly preferably 25 MPa or more, more preferably 27 MPa or more, and even more preferably 30 MPa or more. The upper limit is not specifically limited, but may be, for example, 400 MPa or less, 300 MPa or less, 200 MPa or less, or 100 MPa or less.

Setting the average tensile breaking strength of the film to the upper limit or less is preferred to achieve excellent handleability.

As used herein, the average tensile breaking strength is the average value of tensile breaking strengths in the MD and TD as measured using the method described in the Examples.

The film has an average tensile breaking elongation of preferably 35% or more, more preferably 40% or more, even more preferably 45% or more, still more preferably 50% or more, although not specifically limited thereto. The upper limit is not specifically limited, but may be, for example, 200% or less.

Setting the average tensile breaking elongation of the film in the above-defined range can achieve excellent mechanical properties.

As used herein, the average tensile breaking elongation is the average value of tensile breaking elongations in the MD and TD as measured using the method described in the Examples.

The average tensile breaking strength and the average tensile breaking elongation can be adjusted with the chemical structures, molecular weights, MFRs, contents, cast temperatures during film formation, stretch ratios, and the like of the polyolefin-based resin (A) and the styrene-based thermoplastic elastomer (B).

The average tensile breaking strength and the average tensile breaking elongation can be adjusted by, for example, using a styrene-based thermoplastic elastomer (B) having low compatibility with the polyolefin-based resin (A) as the main component; using a resin with a high weight average molecular weight (Mw) as the main component of the styrene-based thermoplastic elastomer (B); using a resin with a low MFR (i.e., low viscosity) as the main component of the styrene-based thermoplastic elastomer (B); adjusting the content ratio between the polyolefin-based resin (A) and the styrene-based thermoplastic elastomer (B) in the above-defined suitable range; adjusting the temperature of the cast roll during film formation in a suitable range, in the below-described production method; in the case of biaxial stretching, adjusting the machine direction (MD) and transverse direction (TD) stretch ratios as well as the machine direction (MD) to transverse direction (TD) stretch ratio in suitable ranges.

Adopting the means as mentioned above is believed to lead to not only the morphology control of the polyolefin-based resin (A) and the styrene-based thermoplastic elastomer (B), but also the control of pore structure formation and control of the film thickness, which may lead to the formation of an appropriate porous structure and improved air permeation properties.

The film has an air resistance (S) of preferably 50 sec/100 cc or less, more preferably 40 sec/100cc or less, even more preferably 30 sec/100cc or less, still more preferably 25 sec/100cc or less, with 0 sec/100 cc as the lower limit, although not specifically limited thereto.

As used herein, the air resistance (S) is measured according to JIS P8117: 2009 under the condition of 25°C.

The film has a ratio (S/T) of air resistance (S) (sec/100 cc) to thickness (T) ($\mu$m) of 0.15 or more and 1.45 or less. Setting the ratio (S/T) of air resistance (S) to thickness (T) in the above-defined range can achieve a porous film with excellent air permeation properties. From this viewpoint, the value of (S/T) is preferably 0.20 or more and 1.40 or less, more preferably 0.30 or more and 1.30 or less, even more preferably 0.40 or more and 1.20 or less, and particularly preferably 0.50 or more and 1.10 or less.

The value of (S/T) can be adjusted with the chemical structures, molecular weights, MFRs, contents, cast temperatures during film formation, stretch ratios, and the like of the polyolefin-based resin (A) and the styrene-based thermoplastic elastomer (B).

The film preferably has a heat shrinkage ratio of 3% or less when heated at 60°C for 1 hour. When the heat shrinkage ratio is 3% or less, a porous film with excellent dimensional stability can be achieved. From this viewpoint, the heat shrinkage ratio of the film is preferably 2% or less, more preferably 1% or less, even more preferably 0.6% or less, and particularly preferably 0.4% or less.

As used herein, the heat shrinkage ratio can be measured using the following method.

The film is cut into a sample with a length of 150 mm and a width of 10 mm, with each of the machine direction (MD) and transverse direction (TD) taken as the lengthwise direction, and then marked with gauge lines at a distance of 100 mm in the lengthwise direction such that the center in the lengthwise direction is in the middle. Then, the sample is heated in an oven at 60°C for 1 hour, and the gauge length after shrinkage is measured. The measured gauge length is substituted into the following expression to calculate the shrinkage ratio (%). The average value of shrinkage ratios obtained for the machine direction (MD) and transverse direction (TD) is determined as the heat shrinkage ratio in the present invention.

Shrinkage ratio (%) = ((gauge length before shrinkage - gauge length after shrinkage)/gauge length before shrinkage) $\times$ 100

<Method for Producing Porous Film>

A method for producing the porous film of the present invention (hereinafter also referred to as "the method") comprises the step (I) of melt-extruding a resin composition comprising the polyolefin-based resin (A) and the styrene-based thermoplastic elastomer (B) to obtain a sheet before stretching; and the step (II) of stretching the sheet before stretching to obtain a porous film.

<Step (I)>

First, in the step (I), the resin composition is melted and kneaded using an extruder or the like under a temperature condition of not less than the melting point and less than the decomposition temperature of the polyolefin-based resin (A), and then molded to obtain a non-porous sheet before stretching. Examples of molding methods for the non-porous sheet include T-die molding.

When the kneaded material is molded under cooling into the sheet, the temperature of a cast roll is preferably 60°C or more and 150°C or less, more preferably 70°C or more and 140°C or less, even more preferably 80°C or more and 130°C or less, and still more preferably 90°C or more and 120°C or less. When the temperature of the cast roll is the above-defined lower limit value or more, crystallization of the polyolefin-based resin (A) proceeds sufficiently to allow a sufficient porous structure to be formed. On the other hand, when the temperature of the cast roll is the above-defined upper limit value or less, defects such as fusion of the sheet before stretching with the roll that may cause film breakage are less likely to occur.

The speed of the cast roll is preferably 1.0 m/min or more and 5.0 m/min or less, more preferably 1.2 m/min or more and 4.0 m/min or less, and even more preferably 1.5 m/min or more and 3.0 m/min or less. Setting the speed of the cast roll to the above-defined lower limit value or more achieves good productivity. On the other hand, setting the speed of the cast roll to the above-defined upper limit value or less facilitates maintaining the spherical shape of the domain in the sheet before stretching to facilitate forming a sufficient porous structure after stretching.

<Step (I-a)>

The method may also comprise, when melt-extruding the resin composition into a sheet and bringing the sheet into close contact with the cast roll in the step (I), the step (I-a) of bringing only both ends in a width direction of the sheet into close contact with the cast roll, without bringing a central portion in the width direction of the sheet into close contact with the cast roll.

Bringing only both ends of the sheet into close contact with the cast roll, without bringing a central portion in the width direction of the sheet into close contact with the cast roll makes it less likely for uneven close contact to occur, which can prevent uneven pore formation in the film after stretching, allowing a porous film with uniform properties to be obtained.

In the step (I-a), the means for bringing only both ends of the sheet into close contact with the cast roll is not specifically limited, but is preferably the use of a touch roller, from the viewpoint of the strength of the action of pressing the molten resin against the cast roll.

<Step (II)>

Next, the resulting sheet before stretching is stretched uniaxially or biaxially. Uniaxial stretching may be machine direction uniaxial stretching or transverse direction uniaxial stretching. Biaxial stretching may be simultaneous biaxial stretching or sequential biaxial stretching.

The stretching conditions may be selected in each stretching step to fabricate the film to be air-permeable, and it is preferred to adopt sequential biaxial stretching, which allows easy control of the porous structure.

As used herein, stretching in the flow direction (MD) of the sheet is referred to as "machine direction stretching", and stretching in the direction (TD) perpendicular to the flow direction is referred to as "transverse direction stretching".

With sequential biaxial stretching, it is relatively easy to control the porous structure and is easy to achieve a good balance with other various physical properties, such as mechanical strength and shrinkage ratio.

The stretch temperature may be selected appropriately according to the composition, the crystal melting peak temperature, the crystallinity, and the like of the resin composition to be used.

Machine direction stretching is desirably performed at low temperature, specifically at a stretch temperature of preferably 0 to 50°C, more preferably 5 to 40°C. Setting the machine direction stretch temperature to the above-defined upper limit value or less facilitates concentration of stress inside the domain during stretching, which facilitates formation of pores. On the other hand, setting the machine direction stretch temperature to the above-defined lower limit value or more is preferred to prevent breakage during stretching.

The low-temperature machine direction (MD) stretch ratio is preferably 1.1 to 5.0 times, more preferably 1.2 to 4.0 times, and even more preferably 1.3 to 3.0 times. Setting the low-temperature stretch ratio to the above-defined lower limit value or more causes pore formation to proceed, which suggests that sufficient porosification by stretching is taking place. On the other hand, setting the low-temperature stretch ratio to the above-defined upper limit value or less can prevent breakage during stretching.

Machine direction stretching may also be performed as a two-step stretching process in which high-temperature stretching is performed subsequent to the above-described low-temperature stretching. Specifically, the high-temperature stretch temperature is preferably 60 to 155°C, more preferably 70 to 140°C, and even preferably 80 to 130°C. Setting the high-temperature machine direction stretch temperature to the above-defined lower limit value or more can prevent film breakage during stretching. On the other hand, setting the high-temperature machine direction stretch temperature to the above-defined upper limit value or less can prevent blockage of pores formed by the low-temperature stretching.

The high-temperature machine direction (MD) stretch ratio is preferably 1.1 to 5.0 times, more preferably 1.2 to 4.5 times, even more preferably 1.3 to 4.0 times, and still more preferably 1.3 to 3.0 times. Setting the high-temperature stretch ratio to the above-defined lower limit value or more can enlarge the pores formed by the low-temperature machine direction stretching. On the other hand, setting the high-temperature stretch ratio to the above-defined upper limit value or less can adjust the film properties (the thickness, air permeation properties, and mechanical properties) in the suitable ranges, and can prevent film breakage during stretching.

Next, the transverse direction (TD) stretch temperature is preferably 100 to 155°C, and more preferably 110 to 150°C. Setting the transverse direction (TD) stretch temperature in the above-defined range allows pores generated during the machine direction stretching to be enlarged and allows the porosity of the porous layer to increase, leading to sufficient air permeation properties and mechanical properties.

The transverse direction (TD) stretch ratio can be selected as desired, and is preferably 1.1 to 10 times, more preferably 1.5 to 8.0 times, and even more preferably 1.5 to 5.0 times. Stretching at the above-defined transverse direction (TD) stretch ratio can achieve a sufficient porosity, without deformation of pores generated in the machine direction stretching.

When the film is fabricated by biaxial stretching, the stretch ratio of machine direction (MD) stretching to transverse direction (TD) stretching is preferably machine direction (MD):transverse direction (TD)= 0.5 to 1.5:1, and more preferably 0.7 to 1.2:1. Setting the stretch ratio in the above-defined range can adjust the film properties (the thickness, air permeation properties, and mechanical properties) in the suitable ranges.

When the machine direction stretching is performed in two steps at low temperature and high temperature, (low-temperature machine direction (MD) stretch ratio $\times$ high temperature machine direction (MD) stretch ratio): transverse direction (TD) stretch ratio may fall in the above-defined range.

<Separator for power storage device>

The porous film of the present invention is useful as a separator for power storage device. That is, the separator for power storage device of the present invention comprises the porous film of the present invention. Preferred embodiments and preferred properties of the separator for power storage device of the present invention are the same as those described above for the porous film.

<Power Storage Device>

A power storage device of the present invention comprises the separator for power storage device of the present invention. Examples of the power storage device include redox flow batteries, nickel-hydrogen batteries, lithium secondary batteries such as lithium metal secondary batteries, lithium-ion secondary batteries, lithium polymer secondary batteries, and lithium-ion polymer secondary batteries; and capacitor devices, such as aluminum electrolytic capacitors, electric double layer capacitors, and lithium-ion capacitors. Among these, redox flow batteries and lithium secondary batteries are preferred.

Examples

Hereinafter, the porous film of the present invention will be described in more detail by way of examples and comparative examples, but the present invention is not limited thereto.

<Measurement Methods>

(1) Thickness (Film Thickness) (T)

The film was cut into a 10 cm square, and the film thickness was measured at nine points using a 1/1000 mm graduation dial gauge, and the average value was determined as the thickness.

(2) Air Resistance at 25°C (Air Resistance (S))

Air resistance was measured according to JIS P8117: 2009 in an air atmosphere at 25°C. A digital Oken-type air resistance dedicated tester (manufactured by Asahi Seiko Co., Ltd.) was used as the measuring instrument.

(3) Porosity

The film was cut into a 10 cm square; then a density $\rho 1$ (apparent density) was measured, a density $\rho 0$ at a porosity of 0% (true density) was calculated, and the porosity was calculated from these values based on the following expression:

$$\text{Porosity (\%)} = (1 - \rho 1/\rho 0) \times 100$$

(4) Tensile Breaking Strength and Tensile Breaking Elongation

A tensile testing machine (tensile testing machine AG-1kNXplus manufactured by Shimadzu Corporation) was used as the measuring apparatus. The film was cut into a rectangular piece with a length of 100 mm in the measurement direction and a width of 10 mm, for use as a specimen. Both ends in the lengthwise direction of the specimen were chucked with a chuck distance of 40 mm, and pulled at a crosshead speed of 200 mm/min. Three measurements were made for tensile breaking strength determined as the maximum strength from the beginning of the test to break, and for tensile breaking elongation determined as the breaking elongation, and the average values were calculated. The tensile test was performed in both the MD and TD of the film. The values of tensile breaking strength and the values of tensile breaking elongation in the MD and TD were each averaged to determine the average tensile breaking strength and the average tensile breaking elongation.

<Materials>

(Polyolefin-Based Resin (A))

• A-1

Homopolypropylene (weight average molecular weight (Mw): 48,500, molecular weight distribution (Mw/Mn): 4.43, MFR (230°C, 2.16 kg): 1.9 g/10 min)

(Styrene-Based Thermoplastic Elastomer (B))

• B-1

Styrene-based thermoplastic elastomer (styrene-ethylene-propylene-styrene block copolymer (SEPS), weight average molecular weight (Mw): 271,000, molecular weight distribution (Mw/Mn): 1.09, MFR (230°C, 2.16 kg): not flowable, MFR (200°C, 10 kg): not flowable, styrene content: 20% by mass)

• B-2

Styrene-based thermoplastic elastomer (styrene-ethylene-butylene-styrene random copolymer (SEBS), weight average molecular weight (Mw): 285,000, molecular weight distribution (Mw/Mn): 1.11, MFR (230°C, 2.16 kg): not flowable, MFR (200°C, 10 kg): not flowable, styrene content: 33% by mass)

• B-3

Styrene-based thermoplastic elastomer (styrene-ethylene-propylene block copolymer (SEP), weight average molecular weight (Mw): 148,000, molecular weight distribution (Mw/Mn): 1.04, MFR (200°C, 10kg): 1.8 g/10 min, styrene content: 36% by mass)

• B-4

Styrene-based thermoplastic elastomer (styrene-ethylene-propylene block copolymer (SEP), weight average molecular weight (Mw): 186,000, molecular weight distribution (Mw/Mn): 1.07, MFR (230°C, 2.16 kg): 0.1 g/10 min, MFR (200°C, 10 kg): 0.1 g/10 min, styrene content: 35% by mass)

(Crystal Nucleating Agent (C))

• C-1

$\alpha$-Nucleating agent (1,3:2,4-bis-O-(4-methylbenzylidene)-D-sorbitol)

<Fabrication of Porous Films>

Example 1

A material containing 70% by mass of the polyolefin-based resin (A-1), 30% by mass of the styrene-based thermoplastic elastomer (B-1), and 0.1 parts by mass of the crystal nucleating agent (C-1) per 100 parts by mass of the resin components was fed into a $\varphi$ 40 mm twin-screw extruder and melted and kneaded at a set temperature of 200°C; the material was then molded through a T-die into a sheet; then, immediately after the sheet landed on a cast roll set at 105°C, the sheet was cooled and solidified with both ends thereof being pressed with a non-driven touch roll with a diameter of 5 cm and a width of 1 cm to obtain a sheet before stretching with a thickness of 100 $\mu$m. Thereafter, the resulting sheet before stretching was subjected to low-temperature stretching between a roll (X) set at 20°C and a roll (Y) set at 20°C, at the ratio shown in the table. Next, the sheet was subjected to high-temperature stretching between a roll (P) set at 120°C and a roll (Q) set at 120°C, at the ratio shown in the table, to obtain an MD-stretched porous film. Next, the resulting MD-stretched porous film was pre-heated in a film tenter facility manufactured by Kyoto Machinery Co., Ltd. at a pre-heating temperature of 145°C for a pre-heating time of 12 seconds; the film was then transversely stretched at a stretch temperature of 145°C at the ratio shown in the table; and then the film was heat-treated at 155°C to obtain a biaxially stretched porous film. The evaluation results of the obtained film are summarized in Table 1.

Examples 2-4

The contents of the polyolefin-based resin, styrene-based thermoplastic elastomer, and crystal nucleating agent were set as shown in Table 1, and sheets before stretching with a thickness of 100 $\mu$m were obtained using the same method as in Example 1. Thereafter, biaxially stretched porous films were obtained as in Example 1, except that the obtained sheets before stretching were stretched at the stretch ratios as shown in Table 1. The evaluation results of the obtained films are summarized in Table 1.

Example 5

The set temperature of the cast roll was changed to 97°C, the contents of the polyolefin-based resin, styrene-based thermoplastic elastomer, and crystal nucleating agent were set as shown in Table 1, and a sheet before stretching with a thickness of 100 $\mu$m was obtained using the same method as in Example 1. Thereafter, a biaxially stretched porous film was obtained as in Example 1, except that the obtained sheet before stretching was stretched at the stretch ratios as shown in Table 1. The evaluation results of the obtained film are summarized in Table 1.

Reference Example 1

A sheet before stretching with a thickness of 250 μm was obtained as in Example 1, except that the set temperature of the cast roll was changed to 127°C. Thereafter, a biaxially stretched porous film was obtained as in Example 1, except that the obtained sheet before stretching was stretched at the stretch ratios as shown in Table 1. The evaluation results of the obtained film are summarized in Table 1.

Reference Example 2

A sheet before stretching with a thickness of 100 μm was obtained as in Example 1, except that the styrene-based thermoplastic elastomer (B-1) was replaced by the styrene-based thermoplastic elastomer (B-4), and the set temperature of the cast roll was changed to 127°C. Thereafter, a biaxially stretched porous film was obtained as in Example 1, except that the obtained sheet before stretching was stretched at the stretch ratios as shown in Table 1. The evaluation results of the obtained film are summarized in Table 1.

Table 1

| | | | Examples | | | | | Reference Examples | |
|---|---|---|---|---|---|---|---|---|---|
| | | | 1 | 2 | 3 | 4 | 5 | 1 | 2 |
| (A-1) | | [wt%] | 70 | 70 | 70 | 70 | 60 | 70 | 70 |
| (B-1) | | [wt%] | 30 | 30 | - | 20 | 20 | 30 | - |
| (B-2) | | [wt%] | - | - | 30 | - | - | - | - |
| (B-3) | | [wt%] | - | - | - | 10 | 20 | - | - |
| (B-4) | | [wt%] | - | - | - | - | - | - | 30 |
| (C-1) | | [parts by mass] | 0.1 | 0.1 | 0.1 | 0.1 | 0.1 | 0.1 | 0.1 |
| Machine Direction (MD) Stretch Ratio | low temperature | [times] | 2 | 2.5 | 2 | 2 | 2.5 | 2 | 1.5 |
| | high temperature | [times] | 1.5 | 1.5 | 1.5 | 1.5 | 1 | 1.5 | 3 |
| Transverse Direction (TD) Stretch Ratio | | [times] | 3 | 4 | 3 | 3 | 4.2 | 3 | 3 |
| Cast Roll Temperature | | [°C] | 105 | 105 | 105 | 105 | 97 | 127 | 127 |
| Thickness (T) | | [μm] | 26 | 18 | 22 | 20 | 20 | 110 | 20 |
| Porosity | | [%] | 61 | 64 | 63 | 67 | 65 | 74 | 60 |
| Air Resistance | | [sec/100cc] | 24 | 18 | 24 | 16 | 12 | 14 | 20 |
| Air Resistance/Thickness (S/T) | | - | 0.92 | 1.00 | 1.09 | 0.80 | 0.60 | 0.13 | 1.00 |
| Tensile Breaking Strength | MD | [MPa] | 33 | 27 | 25 | 27 | 17 | 14 | 31 |
| | TD | [MPa] | 27 | 41 | 29 | 25 | 16 | 14 | 12 |
| | average | [MPa] | 30 | 34 | 27 | 26 | 17 | 14 | 22 |
| Tensile Breaking Elongation | MD | [%] | 109 | 87 | 102 | 52 | 85 | 35 | 34 |
| | TD | [%] | 33 | 24 | 26 | 25 | 14 | 22 | 24 |
| | average | [%] | 71 | 56 | 64 | 38 | 50 | 29 | 29 |

As shown in Table 1, in Examples 1 to 5, porous films satisfying both of air permeation properties and mechanical properties simultaneously were obtained. Besides, these films caused neither uneven close contact nor film breakage during film formation.

Examples 1 and 2 suggested that increasing the stretch ratios results in higher porosity and superior air permeation properties of the composition. These examples also suggested that increasing the stretch ratios causes the polyolefin-based resin (A) to be oriented, resulting in superior mechanical properties.

On the other hand, in Reference Example 1, in which a film thicker than the films of Examples 1 to 5 was used, the porosity was increased in an attempt to improve the air permeation properties, however, the porosity became excessively high, which decreased the mechanical properties, resulting in a failure to achieve both of air permeation properties and mechanical properties simultaneously.

In Reference Example 2, a film comparable in thickness and porosity to the films of the examples was fabricated; however, the combination of the polyolefin-based resin (A) and the styrene-based thermoplastic elastomer (B) decreased the mechanical properties, resulting in a failure to achieve both of air permeation properties and mechanical properties simultaneously.

(5) Heat Shrinkage Ratio

Each of the porous films fabricated in Examples 1 to 4 was cut into a sample with a length of 150 mm and a width of 10 mm, with each of the machine direction (MD) and transverse direction (TD) taken as the lengthwise direction, and then marked with gauge lines at a distance of 100 mm in the lengthwise direction such that the center in the lengthwise direction was in the middle. Then, the sample was heated in an oven at 60°C for 1 hour, and the gauge length after shrinkage was measured. The measured value of gauge length was substituted into the following expression to calculate the shrinkage ratio (%). The average value of shrinkage ratios obtained for the machine direction (MD) and transverse direction (TD) directions was determined as the heat shrinkage ratio. The results are shown in Table 2.

Shrinkage ratio (%) = ((gauge length before shrinkage - gauge length after shrinkage)/gauge length before shrinkage) $\times$ 100

Table 2

| | | | Examples | | | |
|---|---|---|---|---|---|---|
| | | | 1 | 2 | 3 | 4 |
| | MD | [%] | 0.6 | 0.4 | 0.8 | 0.3 |
| Heat Shrinkage Ratio | TD | [%] | 2.4 | 0.6 | 0.8 | 0.4 |
| | Average | [%] | 1.5 | 0.5 | 0.8 | 0.35 |

As shown in Table 2, in Examples 1 to 4, porous films with a small heat shrinkage ratio and excellent dimensional stability were achieved.

It was suggested that, among these porous films, the porous film of Example 4, using the styrene-olefin copolymer (B1) and the styrene-olefin-styrene block copolymer (B2) as the styrene-based thermoplastic elastomer (B), was particularly excellent in dimensional stability.

**Claims**

1. A porous film comprising a polyolefin-based resin (A) and a styrene-based thermoplastic elastomer (B), wherein the porous film has a thickness (T) of 50 $\mu$m or less, an average tensile breaking strength of 15 MPa or more, an average tensile breaking elongation of 35% or more, and a ratio (S/T) of air resistance (S) (sec/100 cc) to thickness (T) ($\mu$m) of 0.15 or more and 1.45 or less.

2. The porous film according to claim 1, wherein the average tensile breaking strength is 25 MPa or more.

3. The porous film according to claim 1, wherein the polyolefin-based resin (A) is homopolypropylene.

4. The porous film according to claim 1, wherein the styrene-based thermoplastic elastomer (B) comprises a styrene-olefin-styrene block copolymer (B2) in a proportion of 50% by mass or more of the total amount of the styrene-based thermoplastic elastomer (B) taken as 100% by mass.

5. The porous film according to claim 1, wherein the styrene-based thermoplastic elastomer (B) has a styrene content of 10% by mass or more and 40% by mass or less.

6. The porous film according to claim 1, wherein the styrene-based thermoplastic elastomer (B) comprises a resin with a weight average molecular weight (Mw) of 200,000 or more in a proportion of 50% by mass or more of the total amount of the styrene-based thermoplastic elastomer (B) taken as 100% by mass.

7. The porous film according to claim 1, wherein the styrene-based thermoplastic elastomer (B) comprises a resin that has a melt flow rate (MFR) of less than 0.1 g/10 min as measured at a temperature of 200°C and a load of 10 kg, or that is not flowable, in a proportion of 50% by mass or more of the total amount of the styrene-based thermoplastic elastomer (B) taken as 100% by mass.

8. The porous film according to claim 1, wherein the porous film comprises a styrene-olefin copolymer (B1) and the styrene-olefin-styrene block copolymer (B2) as the styrene-based thermoplastic elastomer (B), and wherein the styrene-olefin copolymer (B1) has a melt flow rate (MFR) of 1.0 g/10 min or more as measured at a temperature of 200°C and a load of 10 kg.

9. The porous film according to claim 1, wherein a content of the polyolefin-based resin (A) is 60% by mass or more and 95% by mass or less.

10. The porous film according to claim 1, wherein a content of the styrene-based thermoplastic elastomer (B) is 5% by mass or more and 40% by mass or less.

11. The porous film according to claim 1, further comprising a crystal nucleating agent (C).

12. The porous film according to claim 1, having an air resistance (S) of 50 sec/100 cc or less.

13. A separator for power storage device comprising the porous film according to any one of claims 1 to 12.

14. A power storage device comprising the separator for power storage device according to claim 13.

EP 4 549 500 A1

## INTERNATIONAL SEARCH REPORT

International application No.

**PCT/JP2023/024108**

### A. CLASSIFICATION OF SUBJECT MATTER

***C08J 9/00*** (2006.01)i
FI: C08J9/00 A CES; C08J9/00 CET

According to International Patent Classification (IPC) or to both national classification and IPC

### B. FIELDS SEARCHED

Minimum documentation searched (classification system followed by classification symbols)

C08J9/00-9/42; B01D53/22; B01D61/00-71/82; C02F1/44; H01M50/40-50/497

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-199529 A (MITSUBISHI CHEMICAL HOLDINGS CORP.) 21 November 2019 (2019-11-21) entire text | 1-14 |
| A | JP 2015-229688 A (MITSUBISHI PLASTICS, INC.) 21 December 2015 (2015-12-21) entire text | 1-14 |
| A | JP 2016-117249 A (MITSUBISHI PLASTICS, INC.) 30 June 2016 (2016-06-30) entire text | 1-14 |
| A | JP 2014-233897 A (MITSUBISHI PLASTICS, INC.) 15 December 2014 (2014-12-15) entire text | 1-14 |
| A | JP 2017-75311 A (MITSUBISHI PLASTICS, INC.) 20 April 2017 (2017-04-20) entire text | 1-14 |
| A | WO 2019/107555 A1 (TOKUYAMA CORP.) 06 June 2019 (2019-06-06) entire text | 1-14 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 September 2023** | **26 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/024108**

**C.    DOCUMENTS CONSIDERED TO BE RELEVANT**

| Category* | Citation of document, with indication, where appropriate, of the relevant passages | Relevant to claim No. |
|---|---|---|
| A | JP 2011-516624 A (TONEN CHEMICAL CORP.) 26 May 2011 (2011-05-26)<br>entire text | 1-14 |

Form PCT/ISA/210 (second sheet) (January 2015)

## INTERNATIONAL SEARCH REPORT
### Information on patent family members

International application No.

**PCT/JP2023/024108**

| Patent document cited in search report | | | Publication date (day/month/year) | Patent family member(s) | | | Publication date (day/month/year) |
|---|---|---|---|---|---|---|---|
| JP | 2019-199529 | A | 21 November 2019 | (Family: none) | | | |
| JP | 2015-229688 | A | 21 December 2015 | (Family: none) | | | |
| JP | 2016-117249 | A | 30 June 2016 | (Family: none) | | | |
| JP | 2014-233897 | A | 15 December 2014 | (Family: none) | | | |
| JP | 2017-75311 | A | 20 April 2017 | WO | 2017/065192 | A1 | |
| WO | 2019/107555 | A1 | 06 June 2019 | US | 2020/0362130 | A1 | |
| | | | | entire text | | | |
| | | | | CN | 111417676 | A | |
| JP | 2011-516624 | A | 26 May 2011 | US | 2009/0226814 | A1 | |
| | | | | entire text | | | |
| | | | | WO | 2009/110397 | A1 | |
| | | | | EP | 2263277 | A1 | |
| | | | | KR | 10-2010-0111746 | A | |
| | | | | CN | 101999183 | A | |

Form PCT/ISA/210 (patent family annex) (January 2015)

**REFERENCES CITED IN THE DESCRIPTION**

**Patent documents cited in the description**

- JP 2016141786 A

- JP 2017222823 A